# EUROPÄISCHE PATENTSCHRIFT

(11) **EP 3 514 084 B1**
(45) Veröffentlichungstag und Bekanntmachung des Hinweises auf die Patenterteilung: **29.07.2020**
(21) Anmeldenummer: 19152224.2
(22) Anmeldetag: 17.01.2019
(51) Int. Cl.: B65G 43/00, B65G 43/08, B07C 3/18

(54) **PRODUKT-STATUSANZEIGEVERFAHREN VON AUF EINER LINEARFÖRDEREINRICHTUNG GEFÖRDERTEN PRODUKTEN**
PRODUCT STATUS DISPLAY METHOD FOR PRODUCTS CONVEYED ON A LINEAR CONVEYOR DEVICE
PROCÉDÉ D'AFFICHAGE D'ÉTAT DU PRODUIT DES PRODUITS TRANSPORTÉS SUR UN DISPOSITIF DE TRANSPORT LINÉAIRE

(30) Priorität: 17.01.2018 DE 202018100245 U
(43) Veröffentlichungstag der Anmeldung: 24.07.2019
(73) Patentinhaber: Selmatec Systems GmbH, 21379 Scharnebeck (DE)
(72) Erfinder: Michael, SELENT, 21382 Brietlingen (DE)
(74) Vertreter: Hansen, Jochen

(56) Entgegenhaltungen:
- EP-A1- 2 052 978
- JP-A- H0 958 822
- JP-A- 2016 110 536
- JP-B2- 5 288 704

## Beschreibung

Die Erfindung betrifft ein Produkt-Statusanzeigeverfahren von auf einer Linearfördereinrichtung geförderten Produkten, bei dem auf einer Linearfördereinrichtung Produkte förderbar sind und parallel zur Linearfördereinrichtung eine Anzeigevorrichtung mit wenigstens einem ansteuerbaren, angeordneten Lichtband angeordnet ist, wobei das Lichtband Leuchtsignale abgeben kann und die Leuchtsignale synchron mit den auf der Linearfördereinrichtung aufgelegten Produkten bewegbar sind.

Linearfördereinrichtungen sind zum Fördern von darauf aufgelegten Produkten bekannt. Typische Linearfördereinrichtungen sind Bandförderer, Walzenförderer oder dergleichen. Werden auf dieser Linearfördereinrichtung Produkte aufgelegt, die unterschiedliche Zustände aufweisen, wie beispielsweise, fehlerhafte Produkte, die aus dem Förderstrang von einer Bedienperson zu entfernen sind oder sonstige Aussortierungen erfolgen sollen, ist eine Zuordnung des jeweiligen Zustandes (Status) zu dem jeweilig gerade geförderten Produkt schwierig. Die am Linearförderer eingesetzte Bedienperson hat meist allgemeine Kontrollfunktionen und kann sich nicht alleinig auf das Aussortieren einzelner fehlerhafter Produkte konzentrieren. Entsprechend fehlerhaft sind diese Aktionen.

Im Stand der Technik sind verschiedene Möglichkeiten bekannt, einen Produktstatus an einer Fördereinrichtung zu visualisieren. Dabei sind Ampel-Signalleuten an festen Positionen eine lange bekannte Option. Alternativ oder ergänzend ist es möglich, auf einem Monitor eine entsprechende Anzeige darzustellen, die die Situation am Linearförderer abbildet und den entsprechenden Status einzelner Produkte zeigt.

Bei diesen bekannten Verfahren werden die Signale mehr oder weniger intelligent mit der Fördereinrichtung synchronisiert, so dass an der Ampelsignalleuchte zu dem jeweiligen Zeitpunkt, an dem das betreffende Produkt diese passiert, der betreffende Status des Produktes angezeigt wird. Wenn dabei die Bedienperson gerade anderweitig abgelenkt ist oder noch eine andere Tätigkeit abschließen muss, ist es danach schwierig, das richtige Produkt von der Linearfördereinrichtung zu entfernen. Für die Bedienperson fehlt dabei die direkte Zuordnung zum Produkt, da nur schwer ein Bezug zwischen einer örtlich gebundenen Signalanlage bzw. einer oberhalb der Einrichtung montierten Monitoranzeige und dem zuzuordnenden Produkt möglich ist. Bei der Monitorlösung muss die Bedienperson ständig ihre Blicke vom Produkt auf den Monitor hin- und zurückschwenken, wobei die Positionen mitgezählt werden müssen, um dann wirklich das richtige betreffende Produkt greifen zu können. Die Bedienperson wird dabei von den hauptsächlichen Aufgaben, nämlich der Maschinenkontrolle, Qualitätsprüfung etc. abgelenkt.

Ferner ist es bekannt Sprühmarkierungen auf Produkte aufzubringen, die entlang einer Linearfördereinrichtung transportiert werden. Durch die Sprühmarkierung ist eine eindeutige Zuordnung des betreffenden Zustandes zu dem besprühten Produkt gegeben. Jedoch ist diese direkte, dauerhafte Farbkontaminierung des Produktes nicht immer möglich oder gewünscht.

Nachfolgend wird der druckschriftlich bekannte Stand der Technik des Fachgebietes aufgeführt und erläutert:
Aus der Druckschrift DE 11 2006 003 901 T5 ist eine Personenbeförderungsvorrichtung aufweisend: ein umlaufendes Personentransportband und einen umlaufenden Handlauf, eine Vorrichtung zum Bestimmen der Geschwindigkeit des Transportbandes und / oder des umlaufenden Handlaufs, eine Beleuchtungseinrichtung, die sich entlang des Transportbandes erstreckt und eine Mehrzahl von Beleuchtungsquellen aufweist, sowie eine Beleuchtungssteuerungsvorrichtung, die mit den Beleuchtungsquellen verbunden ist, bekannt, wobei die Beleuchtungssteuerungsvorrichtung dazu ausgebildet ist, eine Beleuchtung von einzelnen Beleuchtungsquellen in Abhängigkeit von der Geschwindigkeit des Transportbandes und / oder des Handlaufs zu bewerkstelligen.

Ferner ist aus der Druckschrift US 7,090,134 B2 ein System zum Projizieren einer Anzeige auf einen Artikel oder ein Paket bekannt, wobei eine Erfassungsvorrichtung zum Erfassen von Kennzeichen auf jedem Paket, ein Verfolgungssystem, eine Steuerung oder ein Computer zum Auswählen der Anzeige basierend auf den Kennzeichen und einen oder mehrere Anzeigeprojektoren verwendet werden. In einer Ausführungsform umfasst oder zeigt die Anzeige eine Handhabungsanweisung. Das System umfasst in einer Ausführungsform ein Laserprojektionssystem, um die ausgewählte Anzeige für mehrere Pakete gleichzeitig auf eine ausgewählte Außenfläche des entsprechenden Pakets zu malen. Das System kann so konfiguriert sein, dass es jede Anzeige in der Reihenfolge bewegt, in der es jedem sich bewegenden Paket folgt, so dass jede Anzeige für einen Betrachter in einem Anzeigebereich lesbar bleibt, in dem die Handhabung stattfindet.

Aus der Druckschrift US 2004/0016684 A1 ist ein Sortiersystem zur Verwendung beim manuellen Sortieren bekannt, das eine abgelöste flüchtige Anzeige präsentiert, die sich entsprechend der Bewegung des Artikels bewegt, wodurch ein zu sortierender Artikel schnell und einfach identifiziert werden kann. Um seinen Zweck zu erreichen, umfasst die Vorrichtung: Zuführförderer; eine Schalteinheit; optische Leser, die so positioniert sind, dass sie Zielmarkierungen erfassen, die an jedem Artikel angebracht sind; eine freistehende bewegliche Anzeige, die sich in der Nähe des zu sortierenden Artikels befindet und Informationen darstellt, die den Zielort des Artikels repräsentieren; einen Zielort, der signalisiert, wenn sich ein verwandter Artikel nähert; und eine Steuerung, die Zielorte zuweisen und Anzeigegeräte steuern kann.

Aus der Druckschrift US 2017/0066597 A1 ist eine Informationsverarbeitungsvorrichtung, versehen mit einer Erfassungseinheit und einer Berichtssteuereinheit, bekannt, um eine verbesserte Arbeitseffizienz und geringere Arbeitsfehler zu erreichen. Die Erfassungseinheit erfasst Informationen, die in der Arbeit verwendet werden, um an einem Arbeitsobjekt ausgeführt zu werden, aus einem Dokument, das an dem Arbeitsobjekt angehängt ist. Die Erkennungseinheit erkennt den Verbleib des Arbeitsobjekts. Auf der Grundlage einer Regel, bei der es sich um Daten handelt, bei denen die Informationen, die in den Arbeitsinhalten verwendet werden, die die Informationen verwenden, einander zugeordnet sind, erfasst die Berichtssteuereinheit die Arbeitsinhalte für das Arbeitsobjekt. Des Weiteren meldet die Berichtssteuereinheit den Arbeitsinhalt durch Steuern einer Berichtsvorrichtung zum Berichten des Arbeitsinhalts.

Weiter ist aus der Druckschrift WO 2004/079546 A2 ein System zum Projizieren einer Anzeige auf einen Artikel oder ein Paket offenbart, wobei eine Erfassungsvorrichtung zum Erfassen von Markierungen auf jedem Paket, ein Verfolgungssystem, eine Steuerung oder ein Computer zum Auswählen der Anzeige verwendet wird auf den Markierungen und einem oder mehreren Anzeigeprojektoren. In einer Ausführungsform umfasst oder zeigt die Anzeige eine Handhabungsanweisung. Das System umfasst in einer Ausführungsform ein Laserprojektionssystem, um die ausgewählte Anzeige für mehrere Pakete gleichzeitig auf eine ausgewählte Außenfläche des entsprechenden Pakets zu malen. Das System kann so konfiguriert sein, dass es jede Anzeige in der Reihenfolge bewegt, in der es jedem sich bewegenden Paket folgt, so dass jede Anzeige für einen Betrachter in einem Anzeigebereich lesbar bleibt, in dem die Handhabung stattfindet.

Aus der Druckschrift JP 2016 110536 A ist ein Produkt-Statusanzeigeverfahren nach dem Oberbegriff des Anspruchs 1 bekannt. Insbesondere ist aus dem Dokument ein Warenverarbeitungssystem und Warenverarbeitungsverfahren bekannt, das in der Lage ist, ein Identifikationsergebnis in Bezug auf ein Objekt leicht zu erfassen. Ein Warenverarbeitungssystem beinhaltet eine Warenidentifikationsvorrichtung zum Identifizieren eines zu fördernden Objekts in einer vorbestimmten Förderrichtung durch einen Gurtförderer als Ware auf der Grundlage von Bildinformationen, die durch die Abbildung des Objekts zu erfassen sind und eine Anzeigesteuerschaltung zum Steuern von Anzeigelampen, die entlang der Förderrichtung angeordnet sind, um ein Identifikationsergebnis in Bezug auf das Objekt entsprechend der Position in der Förderrichtung des Objekts als Identifikationsobjekt der Warenidentifikationsvorrichtung anzuzeigen.

Der vorliegenden Erfindung liegt die **Aufgabe** zugrunde, ein Produkt-Statusanzeigeverfahren aufzuzeigen, bei dem es möglich ist eine eindeutige Zuordnung des Produktstatus zu den jeweilig auf dem Linearförderer geförderten Produkten über einen Linearförderweg auch für gestapelte Produkte anzugeben, so dass dieser auch insbesondere durch Bedienpersonal entsprechend erkannt werden kann.

**Gelöst** wird diese Aufgabe mit einem Produkt-Statusanzeigeverfahren gemäß Anspruch 1. Das Produkt-Statusanzeigeverfahren von auf einer Linearfördereinrichtung geförderten Produkten, bei dem auf einer Linearfördereinrichtung Produkte förderbar sind und parallel zur Linearfördereinrichtung eine Anzeigevorrichtung mit wenigstens einem ansteuerbaren, angeordneten Lichtband angeordnet ist, wobei das Lichtband Leuchtsignale abgeben kann und die Leuchtsignale synchron mit den auf der Linearfördereinrichtung aufgelegten Produkten bewegbar sind, erfasst die Länge des jeweilig geförderten Produktes und bildet das Produkt in Förderrichtung im jeweiligen zugeordneten Leuchtsignal in seiner Längenausdehnung nach. Durch diese Ausbildung kann der Produktstatus, nämlich dessen Länge visuell erfasst und erkannt werden. Beispielsweise können Bediener oder Arbeiter so entsprechende Signale über die auf der Linearfördereinrichtung befindlichen Gegenstände erhalten. Die Längenausdehnung der Produkte, die mittels der Leuchtsignale visualisiert dargestellt wird, ist von Bedeutung, da so eine eindeutige Zuordnung von dem Produktstatus zu dem Bauteil erst möglich wird. Auf diese Weise kann niemals der Produktstatus eines Produktes verloren gehen, während das Produkt auf der Linearfördereinrichtung fortbewegt wird. Es können sowohl kontinuierliche als auch diskontinuierliche Prozesse bzw. Bandaufgaben gefahren werden, ohne dass der Produktstatus verloren geht. Der Produktstatus und dessen Zuordnung bleiben über die gesamte Linearfördereinrichtung erhalten und sind weder zeitlich noch örtlich begrenzt.

Dabei wird bei übereinander gelagerten und/oder gestapelten Produkten die jeweilige Produkthöhe erfasst, wobei über deren Gesamtlänge eine Signalisierung der wenigstens zwei Produkte durch ein wenigstens durch eine Unterbrechung im Leuchtsignal oder ein Unterbrechungsleuchtsignalabschnitt in zwei Abschnitte aufgeteiltes Leuchtsignal erfolgt. Hierbei wird für jedes der gestapelten Produkte ein eigenständiges Produktstatussignal ausgegeben, wobei die Länge des Gesamtleuchtsignals des Produktstatus der Länge des Produktstapels auf der Linearfördereinrichtung entspricht, jedoch entsprechend aufgeteilt in die jeweiligen Produkte des Produktstapels.

Bei beispielsweise drei übereinander gestapelten Produkten könnte das unterste Produkt durch den ersten Abschnitt des Leuchtsignals, das mittlere Produkt durch den zweiten Abschnitt des Leuchtsignals und das oberste Produkt durch den dritten Abschnitt des Leuchtsignals dargestellt werden, wobei ergänzend deren Produkthöhe auch noch zusätzlich visualisiert werden könnte, zumindest prozentual, solange die Länge des Gesamtleuchtsignals nicht überschritten wird. Auf diese Art und Weise kann wiederum eine genaue Referenzierung zwischen Produkt und Leuchtsignal erfolgen.

Dabei signalisiert das für die gestapelten Produkte in Teilabschnitte aufgeteilte Leuchtsignal den jeweiligen Produkt-Status der einzelnen gestapelten Produkte. Es kann zur Visualisierung unterschiedlicher Produkte das Leuchtsignal in dessen Farbe und/oder Helligkeit variiert werden. Hierbei können beispielsweise Produkte unterschiedlicher Art mit unterschiedlichen Farben bzw. Helligkeiten belegt werden. Dies ist auch möglich, obwohl deren Längenausdehnung identisch ist.

Beispielsweise können Produkte, deren weitere Produkteigenschaften als in-Ordnung gekennzeichnet sind, über grüne Leuchtsignale und Produkte, deren weitere Produkteigenschaft(en) als nicht-in-Ordnung gekennzeichnet sind, über rote Leuchtsignale signalisiert werden. Hierdurch ist es für Bediener bzw. Personal, beispielsweise Fertiger in einem Montagewerk möglich, die lediglich Produkte mit dem Produktstatus in-Ordnung verwenden dürfen, ausschließlich verwendbare Produkte zu verwenden, wobei sie lediglich auf die Farbgebung bzw. Variation der Helligkeit achten müssten. Weiterhin können Variationen von Fehlern, quasi unterschiedliche Fehlerklassen mit unterschiedlichen Farben oder Farbcodes, beispielsweise ein Wechselcode aus wenigstens zwei Farben dargestellt werden und so bereits frühzeitig durch Bediener erfasst werden.

Ergänzend kann zur Signalisierung eines besonderen Produktstatus und/oder Produkteigenschaften das zugeordnete Leuchtsignal blinken. Hierdurch wird noch mehr Aufmerksamkeit generiert, so dass entsprechendes Personal frühzeitig über einen entsprechenden Produktstatus informiert wird. Das Blinken kann auch einen Code wiedergeben, der einen Produktstatus noch genauer beschreiben kann. Beispielsweise sind mehrere Blinksignale innerhalb des Leuchtsignals möglich.

Ferner kann zur Erhöhung der Aufmerksamkeit von entsprechendem Personal das Leuchtsignal zumindest in einem Teilbereich oder im gesamten Abschnittsbereich bei Beginn und/oder Ende von Produktgruppen, zusammengehörigen Produkten, gleichartigen Produkten, und/oder defekten und/oder beschädigten Produkten, variiert werden, so dass ein deutliches Leuchtsignal für das Personal wahrnehmbar ist, wobei dies jeweils einzeln oder in Kombination miteinander möglich ist.

Weiter kann die Lücke zwischen etwaigen Produkten zur weiteren Visualisierung verwendet werden, beispielsweise können so unterschiedliche Gruppen von Produkten visuell gebildet werden, beispielsweise dadurch, dass die eigentlich nicht genutzte Lücke zwischen der Visualisierung der einzelnen Produkte durch zusätzliche Visualisierungen, nämlich Aktivierung der Leuchtsignale zumindest in Teilabschnitten der Lücke, möglich wird. Also können beispielsweise zwei aufeinander folgende Produkte, die zu einer Gruppe oder einem Batch gehören visuell miteinander kombiniert werden.

Nachfolgend werden Ausführungsbeispiele anhand der beiliegenden Zeichnungen in der **Figurenbeschreibung** detailliert beschrieben, wobei diese die Erfindung erläutern sollen und nicht beschränkend zu werten sind:
Es zeigen:
- Fig. 1: eine schematische Darstellung eines ersten Ausführungsbeispiels einer Anordnung mit einer Anzeigevorrichtung und einer Linearfördereinrichtung;
- Fig. 2: eine schematische Darstellung eines zweiten Ausführungsbeispiels einer Anordnung mit einer Anzeigevorrichtung und einer Linearfördereinrichtung und
- Fig. 3: eine schematische Darstellung eines dritten Ausführungsbeispiels einer Anordnung mit einer Anzeigevorrichtung und einer Linearfördereinrichtung.

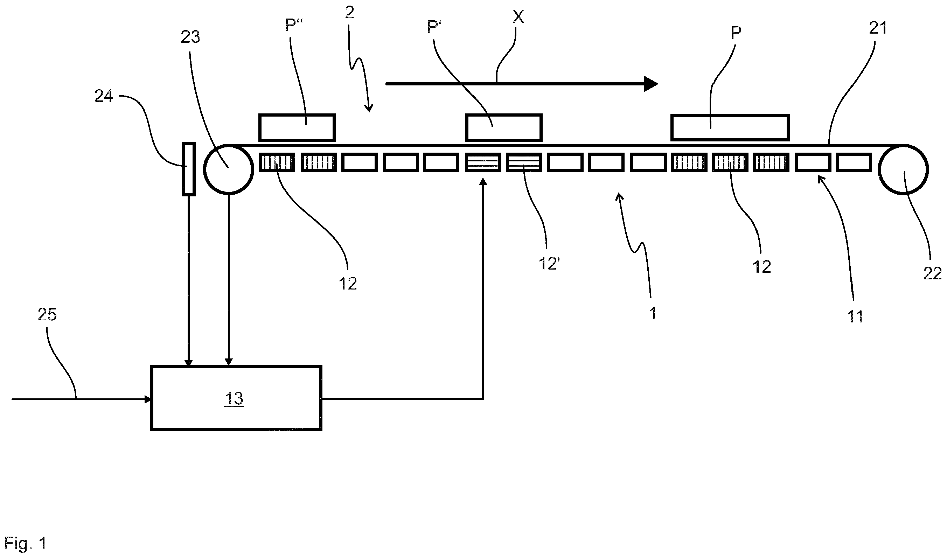

In **Fig. 1** ist eine schematische Darstellung eines ersten Ausführungsbeispiels einer Anordnung mit einer Anzeigevorrichtung und einer Linearfördereinrichtung dargestellt.

Fig. 1 zeigt schematisch eine Linearfördereinrichtung 2 mit der Produkte P in Förderrichtung X transportiert werden. Unmittelbar neben der Linearfördereinrichtung 2 ist eine Anzeigevorrichtung 1 mit bedarfsweise ansteuerbaren Leuchtmitteln 11 angeordnet. Bevorzugt besteht die Anzeigevorrichtung 1 mit den ansteuerbaren Leuchtmitteln 11 aus einem LED-Lichtband 11, dessen in Reihe angeordneten LEDs von einem Steuermittel 13 ansteuerbar sind, sodass sie LED-Leuchtsignale 12 abgeben.

Die Linearfördereinrichtung 2 ist beispielsweise ein Bandförderer mit einem Endlosförderband 21, das über Umlenkrollen 22 geführt ist. Diese Situation ist in Fig. 1 schematisch dargestellt. An einer Umlenkrolle 22 bzw. an dem Endlosförderband 21 anliegend ist ein Drehgeber oder Inkrementalgeber 23 vorgesehen, der die Drehgeschwindigkeit und somit die Fördergeschwindigkeit der Linearfördereinrichtung 2 erfasst und über eine Wirkverbindung zum Steuermittel 13 meldet.

Stromaufwärtig ist an der Linearfördereinrichtung 2 ein Größenerfassungsmittel 24 vorgesehen, welches die Ausmaße, zumindest die Länge des jeweilig transportierten Produktes P erfasst. Die in dem Größenerfassungsmittel 24 erfasste Längendimension des jeweiligen Produktes P wird ebenfalls im Steuermittel 13 zur weiteren Ansteuerung des LED-Lichtbandes 11 verwendet.

In Fig. 1 sind drei Produkte P, P', P" auf der Linearfördereinrichtung 2 auf dem Endlosförderband 21 aufliegend dargestellt. In Förderrichtung X liegt zunächst ein Produkt P mit einer durch das Größenerfassungsmittel 24 erfassten Länge über drei LED-Felder auf. Dieses Produkt P ist ein zuvor im Prozess als ordnungsgemäß gemeldetes Produkt, sodass im Steuermittel 13 jeweils drei Leuchtsignale 12 in beispielsweise grüner Farbe diesen Status 25 sowie die Position und Länge des Produktes P kennzeichnen.

Nachfolgend folgt ein Produkt P' mit geringerer Länge, nämlich über zwei LED-Felder, wobei dieses Produkt im bisherigen Verfahrensablauf als fehlerhaft erkannt wurde, sodass es den Status "nicht in Ordnung" gleich rotes Leuchtsignal 12' erhält. Entsprechend der Längendimension des Produktes P' leuchten somit zwei LED-Felder als Leuchtsignal "rot" 12'. Zwischen dem ersten Produkt P und dem zweiten Produkt P' besteht ein Abstand auf dem Endlosförderband 21, der auf dem LED-Lichtband 11 als Lücke, nämlich hier über zwei nicht angesteuerte LED-Felder dargestellt ist.

Hinter dem Produkt P' folgt mit einer Lücke von einem LED-Feld ein drittes Produkt P" mit gleicher Länge wie das Produkt P', wobei dieses Produkt P" wieder als Status "in Ordnung" zeigt und entsprechend auf dem LED-Lichtband 11 zwei grüne LED als Leuchtsignal "grün" 12 leuchten.

Selbstverständlich können die Leuchtmittel 11 auch in mehreren verschiedenen Farben zu Leuchtsignalen angeregt werden, die einen Farbcode für verschiedene Zustände darstellen. In weiterer Ergänzung können auch mehrere LED-Lichtbänder 11 parallel zu dem Linearförderer 2 angeordnet sein. Beispielsweise kann ein LED-Lichtband 11 in Förderrichtung X rechts neben der Linearfördereinrichtung 2 und ein zweites LED-Lichtband 11 links von der Linearfördereinrichtung 2 angeordnet sein. Dabei kann die Farbkodierung des jeweils gezeigten Leuchtsignals 12, 12' beispielsweise verschiedene Fehlerklassen, Bestimmungsorte für die Produkte und/oder andere wichtige Zustände darstellen. Die Bedienperson kann jederzeit über das auf dem LED-Lichtband 11 gezeigte Leuchtsignal 12 am jeweils zugeordneten Produkt P erkennen, welchen Zustand dieses Produkt P hat. Beispielsweise kann ein fehlerhaftes Produkt P, hier in Fig. 1 das Produkt P', von der Bedienperson vom Linearförderer 2 entfernt werden. Durch die räumliche unmittelbare und stets synchronisierte Zuordnung des Leuchtsignals 12 zum Produkt P, ist eine Falschbedienung durch die Bedienperson auszuschließen.

Nachfolgend wird der Ablauf an der Anordnung unter Bezugnahme auf die Fig. 1 beschrieben.

Die betreffende Linearfördereinrichtung 2 ist in einem Produktionsablauf oder Logistikablauf angeordnet. Stromaufwärtig dieser Linearfördereinrichtung 2 werden Tätigkeiten an den Produkten P sowie Überprüfungen durchgeführt. Bevorzugt unmittelbar vor dem Auflegen der Produkte P auf die Linearfördereinrichtung 2, wird mit dem Größenerfassungsmittel 24 wenigstens die Länge, bevorzugt auch die weiteren Dimensionen des Produktes P, erfasst. Ferner sind aus dem stromaufwärtigen Bearbeitungszyklus an den Produkten P bestimmte Zustände, für das jeweilige Produkt P zugeordnet, bekannt. Diese Informationen, nämlich wenigstens die Länge des jeweiligen Produktes P sowie wenigstens ein Zustand (Status 25), werden dem Steuermittel 13 für die Anzeigevorrichtung 1 gemeldet. In diesem Moment tritt dann auch das erste Produkt P auf das Endlosförderband 21 und wird in Förderrichtung X über Linearfördereinrichtung 2 gefördert. Dabei erzeugt das Steuermittel 13 Steuersignale an das LED-Lichtband 11 derart, dass genau die LED-Leuchtfelder am LED-Lichtband in einer bestimmten Farbe, hier als Leuchtsignal "grün" 12, leuchten. Dabei werden die jeweiligen LED-Lichtfelder so angesteuert, dass die Länge des Leuchtsignals 12 in etwa der Länge des Produktes P entspricht und dieses Leuchtsignal 12 durch Anschalten und Erlöschen des jeweils nächsten LED-Lichtfeldes bzw. des vorangehend letzten LED-Leuchtfeldes synchron mit dem Produkt P bei der Förderung in Förderrichtung X mitwandert. Die Anzeigevorrichtung 1 zeigt somit auf dem LED-Lichtband 11 über die angesteuerten Leuchtsignale 12 stets den Status, hier "grün = in Ordnung", sodass eine Bedienperson zweifelsfrei erkennen kann, welches Produkt P, das auf dem Endlosförderband 21 aufliegt, den gemeldeten Status 25 hat.

Das nachfolgende Produkt P' erreicht mit einer Lücke von zwei Leuchtfeldern bis zum vorangehenden Produkt P ebenfalls die Linearfördereinrichtung 2 und wird auf dem Endlosförderband 21 abgelegt, wobei auch hieran dem Größenerfassungsmittel 24 zumindest die Länge des Produktes P' ermittelt und der zugehörige Zustandswert, hier "nicht in Ordnung", dem Steuermittel 13 mitgeteilt wird. Entsprechend wird vom Steuermittel 13 das LED-Lichtband 11 so angesteuert, dass parallel zum Produkt P' jeweils zwei LED-Felder "rot = nicht in Ordnung" als Leuchtsignal 12' erscheinen, wobei die LED-Felder mit der Fördergeschwindigkeit und in Förderrichtung X parallel mit dem Produkt P' entlang der Linearfördereinrichtung 2 laufen.

Mit einer kleineren Lücke in der Größe von einem LED-Lichtfeld folgt dann ein drittes Produkt P", dass an dem Größenerfassungsmittel 24 in seiner Dimension, zumindest seiner Länge, erfasst sowie aus dem Prozess der Zustand, hier "in Ordnung", dem Steuermittel 13 gemeldet wird. Wiederum erzeugt Steuermittel 13 ein Synchron mit dem Produkt P" mitwanderndes Leuchtsignal 12, hier "grün = in Ordnung" in einer Länge von zwei LED-Leuchtfeldern, das in Förderrichtung X in Fördergeschwindigkeit über das LED-Lichtband 11 parallel zur Förderung des Produktes P" geführt wird.

Mit der Anordnung wird somit sichergestellt, dass auf einen Linearförderer separiert transportierte Produkte unterschiedlichen Status anhand der Anzeigevorrichtung stets von der jeweiligen Bedienperson richtig zugeordnet werden können. Das als Anzeigevorrichtung dienende LED-Lichtband zeigt nämlich zu jedem auf der Linearfördereinrichtung befindlichem Produkt den jeweiligen Status durch eine wählbare Leuchtfarbe der LED-Leuchtfelder an der jeweils richtig zugeordneten Position des spezifischen Produktes, wobei das so dargestellte Leuchtsignal synchron mit der Fördereinrichtung und somit synchron mit dem spezifischen Produkt gezeigt wird. Durch die Anpassung der Anzeigenbreite des jeweiligen Status zu dem betreffenden Produkt sowie Berücksichtigung einer Lücke zwischen aufeinanderfolgenden Produkten, können die Produkte individualisiert werden und bei Förderung von Produkten unterschiedlichen Ausmaßes eine zusätzliche eindeutige Zuordnung gegeben ist.

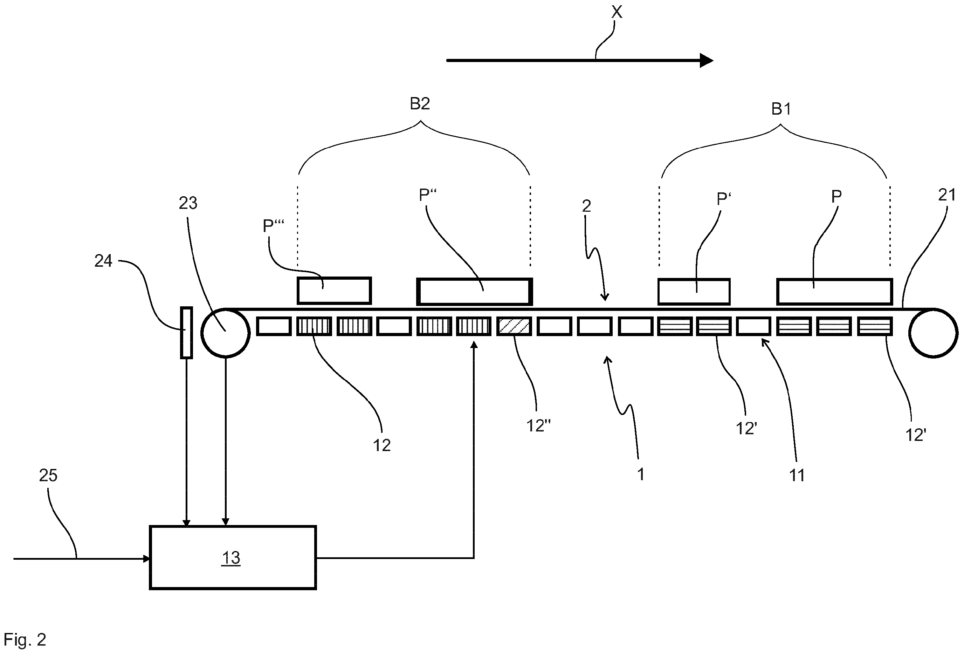

**Fig. 2** zeigt eine schematische Darstellung eines zweiten Ausführungsbeispiels einer Anordnung mit einer Anzeigevorrichtung und einer Linearfördereinrichtung. Hierbei sind jeweils zwei unterschiedliche Produkte, nämlich das erste Produkt P / P" und das zweite Produkt P' / P'" zu einer Gruppe / Batch B1 / B2 zusammengefasst. Hierbei sind die Produkte des ersten Batch B1, nämlich P und P' in Ordnung und werden mit einem ersten Signal 12' visualisiert. Weiter sind die Produkte des zweiten Batch B2, nämlich P" und P'" insgesamt als nicht-in-Ordnung gekennzeichnet, da das Signal 12 im ersten Leuchtsignalfeld des Batch B2 als hier beispielsweise rotes Signal 12" signalisiert, dass bei dem Produkt P" ein Status vorliegt, der nicht den Anforderungen entspricht. Nunmehr können entsprechende Handlungen durch das Bedienpersonal vorgenommen werden, nämlich beispielsweise das Produkt P" nicht zu verwenden bzw. sogar den kompletten Batch B2 nicht zu verwenden.

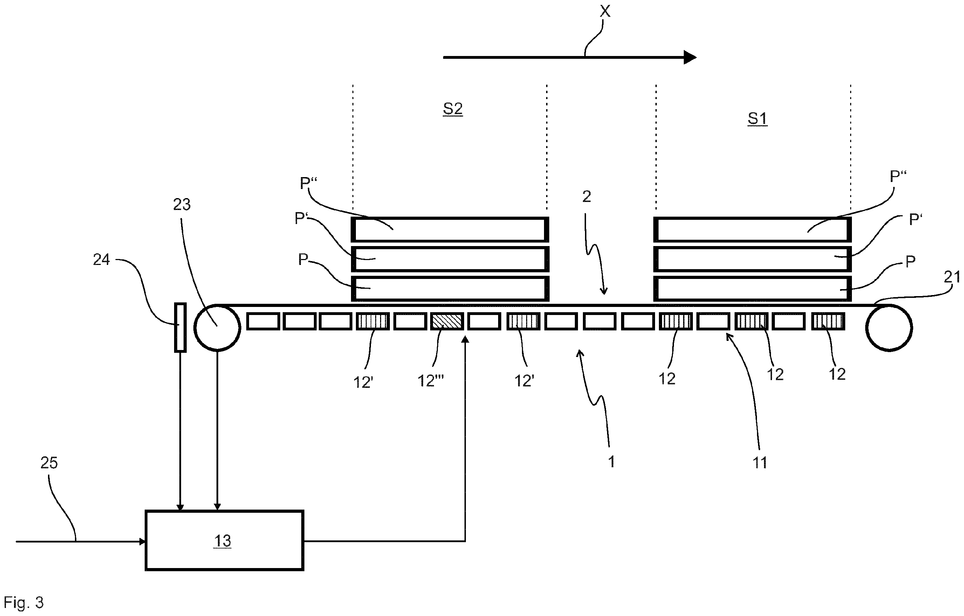

In **Fig. 3** ist eine schematische Darstellung eines dritten Ausführungsbeispiels einer Anordnung mit einer Anzeigevorrichtung und einer Linearfördereinrichtung gezeigt.

In dieser Ausführungsvariante werden Produktstapel, nämlich ein erster Stapel S1 und ein zweiter Stapel S2 über die Linearfördereinrichtung 2 befördert. Die Stapel S1 / S2 bestehen jeweils aus der gleichen Anordnung von Produkten, nämlich einem ersten P, einem zweiten P' und einem dritten Produkt P". Die Visualisierung mittels der Leuchtsignale des Lichtbandes für einen Stapel ist entsprechend der Figur 3 exemplarisch derart ausgestaltet, dass die zu dem Stapel S2 zugeordneten Leuchtsignale 12', 12'" in folgender Form angeordnet sind: Zunächst wird die gesamte Länge des Stapels S2 visualisiert, wobei jedoch durch nichtleuchtende Bereiche, nämlich zwischen 12' am Anfang und 12'" sowie zwischen 12'" und 12' am Ende signalisiert wird, dass es sich um einen Stapel S von Produkten handelt, wobei dies durch die drei Einzelbereiche, nämlich 12', 12'", 12', drei Produkte sind. Durch noch feinere Unterteilung der hier exemplarisch dargestellten Leuchtsignale (Dimensionierung/Länge) können unterschiedlich hohe Produkte durch unterschiedlich lange Leuchtsignale, jedoch exemplarisch beabstandet, visualisiert werden.

Nunmehr wurde festgestellt, dass das zweite Produkt P' des zweiten Stapels S2 einen Status, den das Produkt erfüllen soll, nicht erfüllt, so dass die Signalanzeige des zugehörigen Leuchtsignals 12'" beispielsweise rot leuchtet und beispielsweise zusätzlich blinkt. Auf diese Art und Weise kann eindeutig erkannt werden, dass dieses zweite Produkt P' des zweiten Stapels S2 nicht verwendet werden kann.

### Bezugszeichenliste

- 1: Anzeigevorrichtung
- 11: Leuchtmittel, LED-Lichtband
- 12, 12', 12", 12'": Leuchtsignal
- 13: Steuermittel

- 2: Linearfördereinrichtung
- 21: Endlosförderband
- 22: Umlenkrolle
- 23: Drehgeber, Inkrementalgeber
- 24: Größenerfassungsmittel
- 25: Status

- B1; B2: Batch, Gruppe

- P, P', P", P'": Produkt
- S1, S2: Stapel von Produkten
- X: Förderrichtung

## Patentansprüche

1. Produkt-Statusanzeigeverfahren von auf einer Linearfördereinrichtung (2) geförderten Produkten (P),
bei dem auf einer Linearfördereinrichtung (2) Produkte förderbar sind und parallel zur Linearfördereinrichtung (2) eine Anzeigevorrichtung (1) mit wenigstens einem ansteuerbaren, angeordneten Lichtband (11) angeordnet ist, wobei das Lichtband (11) Leuchtsignale (12) abgeben kann und die Leuchtsignale (12) synchron mit den auf der Linearfördereinrichtung (2) aufgelegten Produkten (P) bewegbar sind,
**wobei**
- wenigstens die Länge des jeweilig geförderten Produktes (P) erfasst wird
und
- das Produkt in Förderrichtung im jeweiligen zugeordneten Leuchtsignal (12) in seiner Längenausdehnung nachgebildet wird,
**dadurch gekennzeichnet, dass**
bei übereinander gelagerten und/oder gestapelten Produkten zusätzlich die jeweilige Produkthöhe erfasst wird, wobei über deren Gesamtlänge eine Signalisierung der wenigstens zwei Produkte durch ein wenigstens durch eine Unterbrechung im Leuchtsignal oder ein Unterbrechungsleuchtsignalabschnitt in zwei Abschnitte aufgeteiltes Leuchtsignal erfolgt,
wobei das für die gestapelten Produkte in Teilabschnitte aufgeteilte Leuchtsignal den jeweiligen Produkt-Status der einzelnen gestapelten Produkte signalisiert.

2. Produkt-Statusanzeigeverfahren nach Anspruch 1,
**dadurch gekennzeichnet, dass**
zur Visualisierung unterschiedlicher Produkte das Leuchtsignal in dessen Farbe und/oder Helligkeit variiert wird.

3. Produkt-Statusanzeigeverfahren nach Anspruch 1 oder 2,
**dadurch gekennzeichnet, dass**
zur Signalisierung eines besonderen Produktstatus und/oder Produkteigenschaften das zugeordnete Leuchtsignal blinkt.

4. Produkt-Statusanzeigeverfahren nach einem der Ansprüche 1, 2 oder 3,
**dadurch gekennzeichnet, dass**
zur Erhöhung der Aufmerksamkeit von entsprechendem Personal das Leuchtsignal zumindest in einem Teilbereich oder im gesamten Abschnittsbereich bei:
- Beginn und/oder Ende von Produktgruppen;
- zusammengehörigen Produkten;
- gleichartigen Produkten;
und/oder
- defekten und/oder beschädigten Produkten;
variiert wird, so dass ein deutliches Leuchtsignal für das Personal wahrnehmbar ist.

## Claims

1. A product status display method for products (P) conveyed on a linear conveyor (2), with which products can be conveyed on a linear conveyor (2) and a display device (1) having at least one actuatable, arranged light strip (11) is arranged parallel to the linear conveyor (2), wherein the light strip (11) can emit luminous signals (12) and the luminous signals (12) are movable synchronously with the products (P) placed on the linear conveyor (2),
wherein
- at least the length of the particular conveyed product (P) is determined
and
- the longitudinal extension of the product is replicated in the respective associated luminous signal (12) in the conveying direction,
**characterized in that**
in the case of products placed and/or stacked one above the other, in addition the respective product height is determined, wherein over their entire length there takes place a signalling of the at least two products by a luminous signal divided into two portions by at least an interruption in the luminous signal or an interruption luminous signal portion,
wherein the luminous signal divided into partial portions for the stacked products signals the respective product status of the individual stacked products.

2. A product status display method according to claim 1,
**characterized in that**
the luminous signal is varied in colour and/or brightness for visualization of different products.

3. A product status display method according to claim 1 or 2,
**characterized in that**
the associated luminous signal blinks to signal a particular product status and/or product features.

4. A product status display method according to any one of claims 1, 2 or 3,
**characterized in that**
- at the start or end of product groups;
- in the case of related product groups;
- in the case of products of the same kind;
and/or
- In the case of defective and/or damaged products;
in order to increase the awareness of appropriate staff, the luminous signal is varied at least in a partial region or in the entire portion region, so that a clear luminous signal can be perceived by the staff.

## Revendications

1. Procédé d'affichage de l'état d'un produit (P) transporté sur un dispositif de transport linéaire (2), procédé dans lequel des produits peuvent être transportés sur un dispositif de transport linéaire (2) et dans lequel un dispositif d'affichage (1), qui est muni d'au moins une bande lumineuse (11) réglable et disposée, est disposé parallèlement au dispositif de transport linéaire (2), la bande lumineuse (11) pouvant émettre des signaux lumineux (12), et les signaux lumineux (12) pouvant être déplacés de manière synchrone avec les produits (P) placés sur le dispositif de transport linéaire (2),
- au moins la longueur du produit (P) transporté considéré étant détectée et
- l'extension longitudinale du produit étant représentée dans la direction de transport par le signal lumineux (12) qui lui est associé,
**caractérisé en ce que,** dans le cas de produits stockés l'un sur l'autre et/ou empilés, la hauteur de produit correspondante est en outre détectée, les au moins deux produits étant signalés sur toute leur longueur par un signal lumineux divisé en deux sections par au moins une interruption du signal lumineux ou une section d'interruption du signal lumineux, le signal lumineux divisé en sections partielles pour les produits empilés indiquant le statut de produit respectif des différents produits empilés.

2. Procédé d'affichage de l'état d'un produit selon la revendication 1, **caractérisé en ce que,** le signal lumineux est modifié dans sa couleur et/ou sa luminosité pour visualiser différents produits.

3. Procédé d'affichage de l'état d'un produit selon la revendication 1 ou 2, **caractérisé en ce que** le signal lumineux associé clignote pour signaler un état de produit et/ou des propriétés de produit particulières.

4. Procédé d'affichage de l'état d'un produit selon l'une des revendications 1, 2 ou 3, **caractérisé en ce que,** pour augmenter l'attention du personnel concerné, le signal lumineux est varié au moins dans une zone partielle ou dans toute la zone de la section :
- au début et/ou à la fin des groupes de produits ;
- en cas de produits apparentés ;
- en cas de produits similaires ; et/ou
- en cas de produits défectueux et/ou endommagés ;
de sorte qu'un signal lumineux non équivoque soit perceptible pour le personnel.
